# EUROPEAN PATENT SPECIFICATION

(11) **EP 2 073 648 B1**
(45) Date of publication and mention of the grant of the patent: **20.04.2011**
(21) Application number: 07841266.5
(22) Date of filing: 23.08.2007
(51) Int. Cl.: A23L 1/30, A23L 1/00

(54) **FOOD PRODUCTS FORTIFIED WITH OMEGA-3 FATTY ACIDS AND PROCESSES FOR MAKING THE SAME**
MIT OMEGA-3-FETTSÄUREN VERSTÄRKTE NAHRUNGSMITTEL UND VERFAHREN ZU IHRER HERSTELLUNG
PRODUITS ALIMENTAIRES FORTIFIÉS AVEC DES ACIDES GRAS OMÉGA-3 ET LEURS PROCÉDÉS DE FABRICATION

(30) Priority: 23.08.2006 US 823317 P
(43) Date of publication of application: 01.07.2009
(73) Proprietor: Kellogg Company, Battle Creek, MI 49016-3599 (US)
(72) Inventor: HOLDRIDGE, Mark, Richland, MI 49083 (US); BELLO, Anthony, TX 75006 (US); ENGLE, Terry, East Leroy, MI 49051 (US)
(74) Representative: Shanks, Andrew
(86) International application number: PCT/US2007/076625
(87) International publication number: WO 2008/024903

(56) References cited:
- EP-A- 1 388 295
- WO-A-2007/030718
- WO-A-2008/022199
- WO-A1-01/62105
- DE-A1- 10 311 585
- US-A- 4 530 848
- DATABASE WPI Week 200125 Derwent Publications Ltd., London, GB; AN 2001-238208 XP002461934 & JP 2001 008667 A (KANEMATSU SHOKUHIN KK) 16 January 2001 (2001-01-16)

## Description

### TECHNICAL FIELD

This invention relates generally to fortification of foods with oxidatively unstable oils and, more particularly, to a process for fortifying foods with omega-3 fatty acids in a way that maintains the stability of the omega-3 fatty acids over extended storage times.

### BACKGROUND OF THE INVENTION

Long chain polyunsaturated fatty acids have been shown to be beneficial to human health. In particular, long chain polyunsaturated omega-3 fatty acids have been shown to be especially beneficial. The three that have been of primary interest include: linolenic acid (18:3w-3); eicosapentaenoic acid (EPA) (20:5w-3); and docosahexaenoic acid (DHA) (22:6w-3). The health benefits associated with enhanced consumption of these omega-3 fatty acids include a lowering of serum cholesterol, reduction of blood pressure, reduction in the risk of heart disease, and a reduction in the risk of stroke. These omega-3 fatty acids are also essential to normal neuronal development and their depletion has been associated with neurodegenerative diseases such as Alzheimer's disease. In the human eye and retina the ratio of DHA:EPA is 5:1 and their presence is necessary for normal eye development. The fatty acid DHA is also believed to be essential for optimal cognitive development in infants. Food fortified with DHA is often called "brain food" in Asian countries. Preliminary studies suggest that long chain polyunsaturated omega-3 fatty acids may play a role in mediating chronic inflammatory assaults and their use by individuals with mild asthma is documented to reduce the severity of the histamine response in asthmatics.

There are several main sources of these beneficial long chain polyunsaturated omega-3 fatty acids. Certain plants provide an abundant source of linolenic fatty acid. Marine animals, such as fish and crustaceans, and marine plants, such as micro algae, are the main sources of EPA and DHA. In particular, fatty fish such as mackerel and salmon contain high levels of EPA and DHA. Marine micro algae contain predominantly DHA. Marine micro algae have an advantage as a source of DHA in that large volumes can be rapidly produced using modern methods and there is no need for the extensive acreage associated with fish farms or the difficulty of fishing. The omega-3 fatty acids are generally found in the form of triglycerides, i.e. one or more of the fatty acids connected to the glycerol backbone is an omega-3 fatty acid, and not in the form of free fatty acids. Both forms have the health benefits and associated oxidative instability. Therefore in this specification and the associated claims no distinction will be made between these two forms of omega-3 fatty acids. The term mega-3 fatty acid refers to both forms unless specifically noted otherwise.

The beneficial effects of the omega-3 fatty acids, especially EPA and DHA, require relatively large amounts of the omega-3 fatty acids making it impractical to obtain the recommended daily amount merely by consuming fish. Thus, both have been made available in caplet form. Consumers do not generally enjoy consuming the caplets in part because they are large and also because the caplets can rapidly develop a fishy rancid type odor and taste. Prior attempts to add DHA and/or EPA directly to foods have been unsuccessful because they are very unstable and rapidly give rise to a fishy odor and taste upon oxidation, there by making the food unpalatable. It is believed that DHA and EPA are particularly unstable in the presence of water and heat, therefore their use in foods has been complicated and largely unsuccessful. Unlike other fatty acids these omega-3 fatty acids can not be stabilized in foods merely by adding well known antioxidants to the food.

It is desirable to provide a simple process to allow for incorporation of oxidatively unstable fatty acids such as EPA, DHA and linolenic acid into foods that does not involve use of complex stabilizers and processing and that maintain the stability of omega-3 fatty acids over extended storage times.
EP1388295 A (Nestec SA) describes a cereal based food product comprising encapsulated DHA. WO 2008/0022199 A (Kellogg Company) describes a process for producing a food product comprising omega-3 fatty acids including a step of combining at least one omega-3 fatty acid with an edible coating prior to conversion of the coating from substantially solid to substantially liquid form. WO 01/62105 A (Recot, Inc.) describes highly seasoned snack chip products and a process for making them by adhering a dry seasoning material to an oleaginous coating that has been applied to the bare chip.

### SUMMARY OF THE INVENTION

In general terms, this invention provides a process for stabilizing omega-3 fatty acid containing powders in foods comprising the steps of providing a coating oil; coating a food product with the coating oil; applying a powder containing omega-3 fatty acids to the coated food product thereby adhering the powder to the coated food product.

These and other features and advantages of this invention will become more apparent to those skilled in the art from the detailed description of a preferred embodiment. The drawings that accompany the detailed description are described below.

### DETAILED DESCRIPTION OF A PREFERRED EMBODIMENT

As discussed above marine animals and marine plants are the main sources of EPA and DHA fatty acids. The use of fish oils as a source of EPA and DHA is well known. Recently, a number of manufactures have developed processes for growing marine micro algae with high efficiency. These micro algae are a great source of EPA and DHA at very high yields in a completely renewable process. Such micro algae derived EPA and DHA are available from a number of sources. One source of micro algae derived EPA and DHA is Martek Biosciences Corporation, Columbia, MD, USA. A second source of micro algae derived EPA and DHA is Nutrinova Nutrition Specialties and Food Ingredients, DE. Preferably, the omega-3 fatty acids are provided as a free flowing powder for the present invention. Typically, the fatty acids are encapsulated in a matrix comprising carbohydrates or protein. They are also available as free flowing powders. One such powder is designated by Martek Biosciences Corp. as Martek DHA™ powder KS35. In the examples disclosed in the present application this Martek powder was used; however, other powdered sources of DHA and EPA are expected to be equally useful in practicing the present invention for example Martek powders Martek DHA™ powder KSF35 or Martek DHA™ powder KSF58.

A common method of adhering powdered substances such as seasonings and flavors to ready to eat cereals and other foods is to spray the food with a sugar-based syrup solution in a coating drum and to then sprinkle in the powdered seasoning blend while tumbling the food. Thus, as a first attempt the inventors used a sugar-based syrup solution to coat ready to eat cereal flakes. In the present invention the inventors chose to use Kelloggs® Smart Start® Antioxidant cereal flakes as the test medium; however the present invention is applicable to any ready to eat cereal, quick cooking oatmeal or other quick cooking grain cereals, or other similar types of base food products. These other base food products include potato chips, tortilla chips, nacho chips, corn chips, baked chips, crackers, cookies, pretzels, baked cheese curls, fried cheese curls and other relatively dry foods such as granola bars and cereal bars.

Formulations for sugar-based syrups are well known in the art and it is believed that all syrups will respond in a similar fashion to the example provided below. The sugar-based syrup formulation is given in Table 1 below. The components of the syrup were combined and then the mixture was heated to a temperature of 110°C (230° F).

**TABLE 1**

| Component | Weight % |
|---|---|
| Water | 15-25 |
| Sugar | 60-75 |
| High Fructose Com Syrup | 0-15 |
| Flavor | 0.5-2 |

The seasoning blend containing the omega-3 powder was prepared by combining a powdered seasoning mixture with the omega-3 fatty acid powder. The seasoning mixture can be of any desired flavor. In one embodiment, the seasoning mixture was a blend comprising brown sugar and cinnamon from the Baltimore Spice company. Any desired seasoning mixture can be used. The seasonings can include spices, herbs, salts, sugars, and any other flavors. The seasoning mixture can comprise only a single ingredient if desired such as a sugar. The seasoning mixture is combined with the omega-3 fatty acid source to form the seasoning blend. One of ordinary skill in the art will be able to select the appropriate seasoning blend based on the desired taste and base food product. The seasoning mixture is dry blended with the powdered omega-3 fatty acids to form the seasoning blend. Generally, the seasoning blend has from 5 to 30% by weight of powdered omega-3 fatty acids added to it depending on the desired level of addition to the base food product. In the experiments described below the seasoning blend was designed to result in an addition of 5% by weight on a dry basis onto the cereal of the seasoning mixture and from 0.5 to 1.2% by weight on a dry basis of the omega-3 powder during the coating process. Depending on the seasoning blend it can be added to the base food product at any desired level, more preferably at levels of from 2 to 15% by weight, most preferably from 2 to 10% by weight based on the final weight of the base food product.

The process of coating the ready to eat cereal was as follows. The cereal flakes were placed in a coating drum. The heated sugar syrup solution was applied to the flakes with a spray gun at approximately 82.2°C (180°F). The seasoning blend was then sprinkled onto the syrup coated cereal flakes and tumbled to thoroughly mix the seasoning blend onto the flakes. The coated and seasoned cereal flakes were then removed from the coating drum and placed on a drying vat for 30 minutes at 93.3°C (200°F) to dry the sugar coating. The cereal was then cooled and packaged in either a level 2 liner material or a level 4 liner material. A level 2 liner material has a water vapor transmission rate of 0.2 to 0.25 and an oxygen transmission rate of 80 to 95. A level 4 liner material has a water vapor transmission rate of 0.12 and an oxygen transmission rate of 60 to 65. A level 2 material is more breathable than a level 4 package. Table 2 below provides the final composition of the sugar syrup coated seasoned cereal flakes. The amount of omega-3 powder varies to provide a constant level of DHA in the final product and the variation is compensated by slight variations in the amount of cereal flakes.

**TABLE 2**

| Component | % by weight on a dry basis |
|---|---|
| Smart Start® Antioxidant flakes | 75-78 |
| Syrup | 15.9-19.4 |
| Seasoning mixture | 5 |
| Omega-3 powder | 0.6 to 1.1 |

Samples were then either tested for a "fishy" aroma or taste immediately after packaging in a level 2 liner material or a level 4 liner material at later time intervals following storage under various conditions, The "fishy" aroma or taste is indicative of oxidation of the omega-3 fatty acids and represents a very undesirable aroma or taste to consumers. A sample was failed when the "fishy" aroma or taste was detected. Once detected the aroma and/or taste just increases in intensity with further storage. It was found that many tested samples of the sugar syrup coated seasoned cereal flakes had a "fishy" aroma and taste immediately after packaging. Tests at several later time points of storage confirm that all samples exhibited failure from 4 weeks on independent of whether they were in a level 2 liner material or a level 4 liner material.

The inventors surprisingly discovered a method for adhering the omega-3 powder to the food that prevents the oxidation and rancidity development discovered in the sugar syrup samples. The inventors have found that certain coating oils can be used to adhere the seasoning blend containing omega-3 fatty acids to the cereal flakes and that these cereal flakes are stable for extended periods of time. This result is surprising and completely unexpected. In carrying out the process the seasoning blend described above was prepared. Smart Start® Antioxidant cereal flakes were placed into a coating drum and 7% by weight, based on the final weight, of a selected coating oil was applied to the cereal. Then 5.6 to 6.2% by weight, based on the final weight, of seasoning blend was applied to the flakes in the coating drum to provide 0.5 to 1.2% by weight of the powdered omega-3 fatty acids. The coating oil coated and seasoned flakes were then removed from the drum, cooled and packaged into level 2 liner material or level 4 liner material. The samples in a level 2 liner were stored at 29°C (85°F) 50% relative humidity and several samples were pulled at time 0 and every 4 weeks thereafter. Other samples were packaged in a level 4 liner material and stored at 29°C (85°F) 50% relative humidity for 12 weeks and then moved to 21°C (70°F) 50% relative humidity for the rest of the testing period. Samples were withdrawn at time 0 and every 4 weeks thereafter. The samples in the level 2 liner material were stable at time 0 and for at least 7 months while the samples stored in the level 4 liner material were stable at time 0 and for 10 months. These results are very dramatic compared to the syrup coated cereal flakes. It was found that the coating oils that were successful in maintaining stability of the DHA coated cereal flakes as described above had the following characteristics: they had an oxidative stability index, as measured by AOCS method CD12B-92 known in the art, of 30 hours or greater and a solid fat content at 21° C of 40 or greater. Coating oils having these characteristics include certain palm oils, palm oil fractions, palm kernel oils, palm kernel oil fractions and blends of these oils. This is an especially surprising discovery especially since there was no need for the addition of any antioxidants to the seasoning blend, coating oil or the base food product formulation. In addition, the cereal flakes tested and the seasoning mixture included one or more of the pro-oxidation fortificants riboflavin, reduced iron or zinc and there was still no oxidation of the omega-3 fatty acids adhered with the coating oil. Obviously, if desired the powdered omega-3 fatty acids could be directly adhered to the food product in the absence of any seasoning mixture using a coating oil as described above. Use of the seasoning mixture, however, is helpful in ensuring accurate depositing of the desired level of omega-3 fatty acids onto the food, in adding additional flavoring to the base food product and in enhancing consumer appeal. The process of coating a base food product with the coating oil does not require a complete coating of the base food product all that is required is at least a partial coating to adhere the omega-3 fatty acid and to stabilize it. In the present specification and claims the term "coating" with respect to coating a base food product with the coating oil requires at least partial coating of the base food product with the coating oil but does not require complete coating of the base food product with the coating oil unless specifically noted.

The present invention will also find use in fortifying other food forms such as cereal or granola bars. Once the bars are prepared and cooled they can be sprayed with the coating oil followed by sprinkling of the seasoning blend onto the bar. The coating oil will adhere the seasoning blend to the bar and the omega-3 fatty acids will be stable on the bar. The coating oil can be applied to the base food product in any known manner including by direct spraying or via use of a waterfall applicator. The powdered omega-3 fatty acids and/or seasoning blend can dusted onto the coated base food product rather than using a coating drum if desired. Preferably the base food product is at a temperature 54,4°C (130°F) or less prior to applying the coating oil to the base food product.

As noted above the powdered omega-3 fatty acids used were obtained from Martek and designated as Martek DHA™ powdered KS35. This powder generally had from 100 to 130 milligrams of DHA per gram of powder. It is desirable to provide approximately 30 to 160 milligrams of DHA per serving in the final food product. The coating oil can be used at levels of from 2 to 20% by weight, more preferably from 5 to 15% by weight based on the total weight of the food product. As noted above useful carrier oils are those with the following characteristics: an oxidative stability index in hours measured according to AOCS method CD12B-92 of 30 or greater and a solid fat content at 21 °C of 40 or greater. Examples of these coating oils include certain palm oils, palm oil fractions, palm kernel oils, palm kernel oil fractions, and blends of these. Palm oils not having these characteristics failed in the stability tests.

If antioxidants were desired then the coating oil could have added to it one or more of the known antioxidants such as: tocopherols; ascorbic acid; ascorbyl palmitate; rosemary extract; butylated hydroxytoluene (BHT); butylated hydroxyanisol (BHA); or tert-butyl-1,4-benzenediol (TBHQ). Alternatively, the antioxidant Duralox®, which can be obtained from Kalsec Inc., Kalamazoo, Michigan, USA could be used. Duralox® is a pre-blended mixture of tocopherols and ascorbic acid. Also 0.02% citric acid could be added to the oil as an antioxidant.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A food product containing omega-3 fatty acid comprising:
a base food product;
a coating oil coating on said food product, said coating oil having an oxidative stability index in hours of 30 or greater and a solid fat content at 2I°C of 40 or greater; and
a powdered omega-3 fatty acid comprising at least one of docosahexaenoic fatty acid, eicosapentaenoic fatty acid, or a mixture thereof, said powdered omega-3 fatty acid applied to said coating oil coating and adhered to said base food product by said coating oil coating.

2. The food product of claim 1 wherein said coating oil coating is present in an amount of from 2 to 20% by weight based on the total weight of the food product.

3. The food product of claim 1 wherein said powdered omega-3 fatty acid comprising at least one of docosahexaenoic fatty acid, eicosapentaenoic fatty acid, or a mixture thereof is present in an amount of from 30 to 160 milligrams per serving of said food product.

4. The food product of claim 1 wherein said base food product comprises at least one of ready to eat cereal, quick cooking oatmeal, potato chips, tortilla chips, nacho chips, corn chips, baked chips, crackers, cookies, pretzels, baked cheese curls, fried cheese curls, granola bars and cereal bars.

5. The food product of claim 1 wherein said powdered omega-3 fatty acid is part of a powdered seasoning mixture and said seasoning mixture is adhered to said base food product by said coating oil.

6. The food product of claim 1 wherein the food product is stable for at least 12 weeks of storage at 21°C (70°F) 50% relative humidity with no detectable fishy aroma or taste.

7. The food product of claim 1 wherein the coating oil comprises a palm oil, a palm oil fraction, a palm kernel oil, a palm kernel oil fraction, or a blend thereof.

8. A process for adding an omega-3 fatty acid containing powder to a base food product comprising the steps of:
a) providing a coating oil, said coating oil having an oxidative stability index in hours of 30 or greater and a solid fat content at 21°C of 40 or greater;
b) coating a base food product with the coating oil; and
c) applying powdered omega-3 fatty acids comprising at least one of docosahexaenoic fatty acid, eicosapentaenoic fatty acid, or a mixture thereof to the coating oil coated base food, product thereby adhering the powdered omega-3 fatty acid to the base food product.

9. A process for adding omega-3 fatty acid containing powder to a base food product according to claim 8 wherein step b) comprises coating the base food product with from 2 to 20% by weight based on the food product weight of coating oil.

10. A process for adding omega-3 fatty acid containing powder to a base food product according to claim 8 wherein step c) comprises applying from 30 to 160 milligrams of said omega-3 fatty acids comprising at least one of docosahexaenoic fatty acid, eicosapentaenoic fatty acid, or a mixture thereof per serving of said base food product.

11. A process for adding omega-3 fatty acid containing powder to a base food product according to claim 8 wherein step b) comprises coating a base food product comprising at least one of ready to eat cereal, quick cooking oatmeal, potato chips, tortilla chips, nacho chips, corn chips, baked chips, crackers, cookies, pretzels, baked cheese curls, fried cheese curls, granola bars and cereal bars.

12. A process for adding omega-3 fatty acid containing powder to a base food product according to claim 8 wherein step c) comprises applying a powdered seasoning mixture containing said powdered omega-3 fatty acids.

13. A process for adding omega-3 fatty acid containing powder to a base food product according to claim 8 further comprising after step c) cooling the food product to solidify the coating oil coating.

14. A process for adding omega-3 fatty acid containing powder to a base food product according to claim 8 wherein step b) comprises one of spraying the coating oil directly onto the base food product, spraying the coating oil into a coating drum containing the base food product thereby coating the base food product, and passing the base food product through a waterfall applicator to apply the coating oil to the base food product.

15. A process for adding omega-3 fatty acid containing powder to a base food product according to claim 8 wherein step a) comprises providing a coating oil comprising a palm oil, a palm oil fraction, a palm kernel oil, a palm kernel oil fraction, or a blend thereof.

## Patentansprüche

1. Nahrungsmittelprodukt, das Omega-3-Fettsäure enthält, wobei das Produkt aufweist:
ein Ausgangsnahrungsmittelprodukt;
einen Beschichtungsölüberzug auf dem Nahrungsmittelprodukt, wobei der Beschichtungsölüberzug einen Oxidationsbeständigkeitsindex von mindestens 30 Stunden und einen Festfettgehalt bei 21 °C von mindestens 40 aufweist; und
eine pulverförmige Omega-3-Fettsäure, die mindestens eine der Säuren Docosahexaenfettsäure, Eicosapentaenfettsäure oder ein Gemisch davon aufweist, wobei die pulverförmige Omega-3-Fettsäure auf den Beschichtungsölüberzug aufgebracht und durch den Beschichtungsölüberzug an das Ausgangsnahrungsmittelprodukt anhaftet.

2. Nahrungsmittelprodukt nach Anspruch 1, wobei der Beschichtungsölüberzug in einem Anteil von 2 bis 20 Gew.-% anwesend ist, bezogen auf das Gesamtgewicht des Nahrungsmittelprodukts.

3. Nahrungsmittelprodukt nach Anspruch 1, wobei die pulverförmige Omega-3-Fettsäure, die mindestens eine Docosahexaenfettsäure, Eicosapentaenfettsäure oder ein Gemisch davon aufweist, in einem Anteil von 30 bis 160 Milligramm pro Portion des Nahrungsmittelprodukts anwesend ist.

4. Nahrungsmittelprodukt nach Anspruch 1, wobei das Nahrungsmittelprodukt mindestens eines der folgenden Produkte aufweist: verzehrfertiges Getreide, schnellkochendes Hafermehl, Kartoffel-Chips, Tortilla-Chips, Nacho-Chips, Mais-Chips, gebackene Chips, Kekse, Plätzchen, Brezeln, gebackene Käsekringel, frittierte Käsekringel, Müsliriegel und Getreideriegel.

5. Nahrungsmittelprodukt nach Anspruch 1, wobei die pulverförmige Omega-3-Fettsäure Teil eines pulverförmigen Würzmittelgemischs ist und das Würzmittelgemisch durch das Beschichtungsöl an das Ausgangsnahrungsmittelprodukt angeklebt wird.

6. Nahrungsmittelprodukt nach Anspruch 1, wobei das Nahrungsmittelprodukt über mindestens 12 Wochen Lagerung bei 21°C (70°F), 50% relativer Feuchtigkeit ohne nachweisbaren Fischgeruch oder -geschmack beständig ist.

7. Nahrungsmittelprodukt nach Anspruch 1, wobei das Beschichtungsöl ein Palmöl, eine Palmölfraktion, ein Palmkernöl, eine Palmkernölfraktion oder ein Gemisch davon aufweist.

8. Verfahren zum Beimischen eines Omega-3-Fettsäure enthaltenden Pulvers zu einem Ausgangsnahrungsmittelprodukt, wobei das Verfahren die folgenden Schritte aufweist:
a) Bereitstellen eines Beschichtungsöls, wobei das Beschichtungsöl einen Oxidationsbeständigkeitsindex von mindestens 30 Stunden und einen Festfettgehalt bei 21°C von mindestens 40 aufweist;
b) Beschichten eines Ausgangsnahrungsmittelprodukts mit dem Beschichtungsöl; und
c) Aufbringen von pulverförmigen Omega-3-Fettsäuren, die mindestens eine der Säuren Docosahexaenfettsäure, Eicosapentaenfettsäure oder ein Gemisch davon aufweisen, auf das mit Beschichtungsöl überzogene Ausgangsnahrungsmittelprodukt, wodurch die pulverförmige Omega-3-Fettsäure an das Ausgangsnahrungsmittelprodukt anhaftet.

9. Verfahren zum Beimischen eines Omega-3-Fettsäure enthaltenden Pulvers zu einem Ausgangsnahrungsmittelprodukt nach Anspruch 8, wobei Schritt b) das Beschichten des Ausgangsnahrungsmittelprodukts mit 2 bis 20 Gew.-% Beschichtungsöl, bezogen auf das Gewicht des Nahrungsmittelprodukts, beinhaltet.

10. Verfahren zum Beimischen eines Omega-3-Fettsäure enthaltenden Pulvers zu einem Ausgangsnahrungsmittelprodukt nach Anspruch 8, wobei Schritt c) das Aufbringen von 30 bis 160 Milligramm der Omega-3-Fettsäuren, die mindestens eine der Säuren, Docosahexaenfettsäure, Eicosapentaenfettsäure oder ein Gemisch davon aufweisen, pro Portion des Ausgangsnahrungsmittelprodukts beinhaltet.

11. Verfahren zum Beimischen eines Omega-3-Fettsäure enthaltenden Pulvers zu einem Ausgangsnahrungsmittelprodukt nach Anspruch 8, wobei Schritt b) das Beschichten eines Ausgangsnahrungsmittelprodukts beinhaltet, das mindestens eines der folgenden Produkte aufweist: verzehrfertiges Getreide, schnellkochendes Hafermehl, Kartoffel-Chips, Tortilla-Chips, Nacho-Chips, Mais-Chips, gebackene Chips, Kekse, Plätzchen, Brezeln, gebackene Käsekringel, frittierte Käsekringel, Müsliriegel und Getreideriegel.

12. Verfahren zum Beimischen eines Omega-3-Fettsäure enthaltenden Pulvers zu einem Ausgangsnahrungsmittelprodukt nach Anspruch 8, wobei Schritt c) das Aufbringen eines pulverförmigen Würzmittelgemischs beinhaltet, das die pulverförmigen Omega-3-Fettsäuren enthält.

13. Verfahren zum Beimischen eines Omega-3-Fettsäure enthaltenden Pulvers zu einem Ausgangsnahrungsmittelprodukt nach Anspruch 8, das ferner nach Schritt c) das Abkühlen des Nahrungsmittelprodukts beinhaltet, um den Beschichtungsölüberzug erstarren zu lassen.

14. Verfahren zum Beimischen eines Omega-3-Fettsäure enthaltenden Pulvers zu einem Ausgangsnahrungsmittelprodukt nach Anspruch 8, wobei Schritt b) einen der folgenden Vorgänge beinhaltet: direktes Aufsprühen des Beschichtungsöls auf das Ausgangsnahrungsmittelprodukt, Sprühen des Beschichtungsöls in eine Beschichtungstrommel, die das Ausgangsnahrungsmittelprodukt enthält, wodurch das Ausgangsnahrungsmittelprodukt beschichtet wird, und Durchlauf des Ausgangsnahrungsmittelprodukts durch einen Wasserfall-Applikator, um das Beschichtungsöl auf das Ausgangsnahrungsmittelprodukt aufzubringen.

15. Verfahren zum Beimischen eines Omega-3-Fettsäure enthaltenden Pulvers zu einem Ausgangsnahrungsmittelprodukt nach Anspruch 8, wobei Schritt c) die Bereitstellung eines Beschichtungsöls beinhaltet, das ein Palmöl, eine Palmölfraktion, ein Palmkernöl, eine Palmkernölfraktion oder ein Gemisch davon aufweist.

## Revendications

1. Produit alimentaire contenant un acide gras omega-3 comprenant:
un produit alimentaire de base;
une huile d'enrobage faisant une couche sur ledit produit alimentaire, ladite huile d'enrobage possédant un indice de stabilité à l'oxydation en heures de 30 ou plus et une teneur en graisse solide à 21 °C de 40 ou plus; et
un acide gras oméga-3 en poudre comprenant au moins un parmi un acide gras docosahexaénoïque, un acide gras eicosapentaénoïque ou un mélange de ceux-ci, ledit acide gras oméga-3 en poudre étant appliqué sur ladite couche d'huile d'enrobage et adhérant audit produit alimentaire de base par ladite couche d'huile d'enrobage.

2. Produit alimentaire selon la revendication 1, dans lequel ladite couche d'huile d'enrobage est présente dans une quantité de 2 à 20% en poids sur la base du poids total du produit alimentaire.

3. Produit alimentaire selon la revendication 1, dans lequel ledit acide gras oméga-3 en poudre comprenant au moins un parmi un acide gras docosahexaénoïque, un acide gras eicosapentaénoïque ou un mélange de ceux-ci est présent dans une quantité de 30 à 160 milligrammes par portion dudit produit alimentaire.

4. Produit alimentaire selon la revendication 1, dans lequel ledit produit alimentaire de base comprend au moins un parmi des céréales prêtes à consommer, de la bouillie d'avoine à cuisson rapide, des chips aux pommes de terre, des chips tortillas, des chips nachos, des chips au maïs, des chips cuites, des crackers, des cookies, des bretzels, des spirales au fromage cuites, des spirales au fromage frites, des barres pour petit déjeuner et des barres de céréales.

5. Produit alimentaire selon la revendication 1, dans lequel ledit acide gras oméga-3 en poudre est une partie d'un mélange d'assaisonnement en poudre et ledit mélange d'assaisonnement adhère audit produit alimentaire de base par ladite huile d'enrobage.

6. Produit alimentaire selon la revendication 1, où le produit alimentaire est stable pendant au moins 12 semaines de stockage à 21°C (70°F), 50% d'humidité relative sans arôme ou goût de poisson détectable.

7. Produit alimentaire selon la revendication 1, dans lequel l'huile d'enrobage comprend une huile de palme, une fraction d'huile de palme, une huile de noix de palme, une fraction d'huile de noix de palme ou un mélange de celles-ci.

8. Procédé pour l'ajout d'une poudre contenant un acide gras oméga-3 à un produit alimentaire de base comprenant les étapes:
a) de fourniture d'une huile d'enrobage, ladite huile d'enrobage possédant un indice de stabilité à l'oxydation en heures de 30 ou plus et une teneur en graisse solide à 21°C de 40 ou plus;
b) d'enrobage d'un produit alimentaire de base avec l'huile d'enrobage; et
c) d'application d'acides gras oméga-3 en poudre comprenant au moins un parmi un acide gras docosahexaénoïque, un acide gras eicosapentaénoïque ou un mélange de ceux-ci sur le produit alimentaire de base enrobé avec l'huile d'enrobage, faisant ainsi adhérer l'acide gras oméga-3 en poudre au produit alimentaire de base.

9. Procédé pour l'ajout d'une poudre contenant un acide gras oméga-3 à un produit alimentaire de base selon la revendication 8, dans lequel l'étape b) comprend l'enrobage du produit alimentaire de base avec de 2 à 20% en poids sur la base du poids du produit alimentaire d'huile d'enrobage.

10. Procédé pour l'ajout d'une poudre contenant un acide gras oméga-3 à un produit alimentaire de base selon la revendication 8, dans lequel l'étape c) comprend l'application de 30 à 160 milligrammes desdits acides gras oméga-3 comprenant au moins un parmi un acide gras docosahexaénoïque, un acide gras eicosapentaénoïque ou un mélange de ceux-ci par portion dudit produit alimentaire de base.

11. Procédé pour l'ajout d'une poudre contenant un acide gras oméga-3 à un produit alimentaire de base selon la revendication 8, dans lequel l'étape b) comprend l'enrobage d'un produit alimentaire de base comprenant au moins un parmi des céréales prêtes à consommer, de la bouillie d'avoine à cuisson rapide, des chips aux pommes de terre, des chips tortillas, des chips nachos, des chips au maïs, des chips cuites, des crackers, des cookies, des bretzels, des spirales au fromage cuites, des spirales au fromage frites, des barres pour petit déjeuner et des barres de céréales.

12. Procédé pour l'ajout d'une poudre contenant un acide gras oméga-3 à un produit alimentaire de base selon la revendication 8, dans lequel l'étape c) comprend l'application d'un mélange d'assaisonnement en poudre contenant lesdits acides gras oméga-3 en poudre.

13. Procédé pour l'ajout d'une poudre contenant un acide gras oméga-3 à un produit alimentaire de base selon la revendication 8, comprenant en outre après l'étape c) le refroidissement du produit alimentaire pour solidifier la couche d'huile d'enrobage.

14. Procédé pour l'ajout d'une poudre contenant un acide gras oméga-3 à un produit alimentaire de base selon la revendication 8, dans lequel l'étape b) comprend une opération parmi la pulvérisation de l'huile d'enrobage directement sur le produit alimentaire de base, la pulvérisation de l'huile d'enrobage dans un tambour d'enrobage contenant le produit alimentaire de base enrobant ainsi le produit alimentaire de base, et le passage du produit alimentaire de base à travers un applicateur à chute d'eau pour appliquer l'huile d'enrobage sur le produit alimentaire de base.

15. Procédé pour l'ajout d'une poudre contenant un acide gras oméga-3 à un produit alimentaire de base selon la revendication 8, dans lequel l'étape a) comprend la fourniture d'une huile d'enrobage comprenant une huile de palme, une fraction d'huile de palme, une huile de noix de palme, une fraction d'huile de noix de palme ou un mélange de celles-ci.
